# FASCICULE DE BREVET EUROPEEN

(11) **EP 2 922 719 B1**
(45) Date de publication et mention de la délivrance du brevet: **12.07.2017**
(21) Numéro de dépôt: 13802556.4
(22) Date de dépôt: 26.11.2013
(51) Int. Cl.: B60K 6/48, B60K 17/356, B60L 15/20, B60W 20/10, B60K 6/52, B60K 28/16, B60W 30/18, B60W 30/184, B60K 7/00

(54) **SYSTÈME ET PROCÉDÉ DE COMMANDE D'UN VÉHICULE AUTOMOBILE À MACHINES ÉLECTRIQUES ARRIÈRES INDÉPENDANTES**
SYSTEM UND VERFAHREN ZUR STEUERUNG EINES KRAFTFAHRZEUGS MIT UNABHÄNGIGEN HINTEREN ELEKTRISCHEN MASCHINEN
SYSTEM AND METHOD FOR CONTROLLING A MOTOR VEHICLE WITH INDEPENDENT REAR ELECTRIC MACHINES

(30) Priorité: 26.11.2012 FR 1261214
(43) Date de publication de la demande: 30.09.2015
(73) Titulaire: Renault S.A.S., 92100 Boulogne-Billancourt (FR); MICHELIN Recherche et Technique S.A., 1763 Granges-Paccot (CH); Compagnie Générale des Etablissements Michelin, 63000 Clermont-Ferrand (FR)
(72) Inventeur: KETFI-CHERIF, Ahmed, F-78990 Elancourt (FR); LAUNAY, Gregory, F-75015 Paris (FR); MALOUM, Abdelmalek, F-94550 Chevilly La Rue (FR); SCHEFFGES, Olivier, F-92140 Clamart (FR); DEBERT, Maxime, F-78000 Versailles (FR)
(86) Numéro de dépôt international: PCT/EP2013/074680
(87) Numéro de publication internationale: WO 2014/080028

(56) Documents cités:
- EP-A1- 1 527 928
- EP-A2- 1 327 547
- WO-A1-2010/136072
- WO-A2-2009/120463
- US-A- 6 008 606
- US-A1- 2011 301 792

## Description

L'invention a pour domaine technique le contrôle des véhicules hybrides, et plus particulièrement le contrôle des véhicules hybrides à machines électriques arrières indépendantes.

Les véhicules hybrides à moteurs-roues comprennent deux systèmes de traction et proposent ainsi une offre complémentaire à celle des véhicules tout électrique.

Le premier système de traction de tels véhicules est purement électrique. Il comprend, sur le train arrière, deux machines électriques de traction du type « moteurs roues ».

Le second système de traction est un groupe motopropulseur thermique composé d'un moteur thermique et d'une boite robotisée.

Le véhicule est principalement destiné à un usage électrique urbain mais doit également être utilisable en usage extra-urbain.

Le fonctionnement thermique permet au véhicule une autonomie supplémentaire et une vitesse maximale plus importante comparée au mode électrique.

Le fonctionnement électrique est donc volontairement limité à une vitesse maximale, par exemple de 90 km/h. Un système de désaccouplement permet de libérer les machines électriques au-delà de cette vitesse. On peut ainsi dimensionner les machines électriques sur une plage de vitesse suffisante, diminuer les pertes du véhicule, et donc la consommation énergétique, au-delà de 90 km/h et disposer d'une barrière de sécurité supplémentaire pour assurer au conducteur le contrôle du véhicule en cas de disfonctionnement du système de traction électrique.

Compte tenu de la conception de ce véhicule, il est indispensable de protéger les machines électriques de traction d'un risque de survitesse en fonctionnement. Pour cela on limite la vitesse des machines électriques dans toutes les conditions de fonctionnement nominal, y comprit lorsque une roue patine ou ne touche plus le sol. On évite ainsi d'avoir une roue qui s'emballe. On doit également pouvoir assurer ce niveau de protection tant en fonctionnement nominal qu'en cas de dysfonctionnement partiel ou complet du système de traction électrique.

De l'état de la technique, on connait les documents suivants. Le document WO 2009/120463 A2 décrit un procédé de commande d'un véhicule automobile comprenant les caractéristiques du préambule de la revendication 1. Le document US20090033264A1 divulgue un dispositif standard de limitation et de régulation de la vitesse d'un véhicule.

Le document WO200735146A1 divulgue un dispositif de contrôle en vitesse d'un élément de la chaine cinématique d'un véhicule motorisé.

Le document WO201023998A1 divulgue un dispositif de régulation et de limitation de la vitesse d'un véhicule automobile.

Il subsiste ainsi un besoin pour un système et un procédé de commande aptes à prévenir un risque de survitesse en fonctionnement des machines électriques de traction.

Un objet de l'invention est un procédé de commande d'un véhicule automobile comprenant un moteur à combustion interne couplé à un premier train de roues et au moins deux machines électriques couplées chacune à une roue d'un deuxième train de roues. Le procédé comprend les étapes suivantes :
on détermine la vitesse d'au moins une des machines électriques,
on compare la vitesse déterminée à un seuil,
si la vitesse déterminée est supérieure au dit seuil, on agit sur le couple maximal des machines électriques de façon à limiter la vitesse de rotation desdites machines.

On peut déterminer la vitesse des machines électriques à partir de la valeur maximale parmi les vitesses de rotation des machines électriques gauche et droite sur une période de temps prédéterminée.

On peut déterminer la vitesse des machines électriques à partir des mesures des vitesses de rotation des roues droite et gauche du deuxième train de roues et de la valeur maximale parmi les vitesses de rotation des roues gauche et droite sur une période de temps prédéterminée

On peut déterminer si la vitesse de rotation des machines électriques est supérieure à un premier seuil de vitesse,
si tel est le cas, on régule le couple maximal des machines électriques pour limiter leur vitesse de rotation.

Alternativement, si la vitesse de rotation des machines électriques est supérieure à un deuxième seuil de vitesse supérieur au premier seuil,
on émet une consigne de couple maximal nul pour les machines électriques.

Le premier train de roues peut être le train avant, le deuxième train de roues pouvant être le train arrière.

Un autre objet de l'invention est un système de commande d'un véhicule automobile comprenant un moteur à combustion interne couplé à un premier train de roues et au moins deux machines électriques couplées chacune à une roue du deuxième train de roues, le système de commande étant relié au moteur à combustion interne et aux machines électriques. Le système comprend un moyen de détermination de la vitesse des machines électriques, un moyen de détermination de conditions d'activation d'une limitation de la vitesse de rotation des machines électriques et un moyen de régulation du couple des machines électriques.

Le système de commande peut être relié aux machines électriques par une première liaison de données, le moyen de détermination de la vitesse des machines électriques pouvant être apte à déterminer une vitesse limite des machines électriques égale à la valeur maximale parmi les vitesses de rotation des machines électriques gauche et droite transmises par la première liaison de données sur une période de temps prédéterminée.

Le système de commande peut être relié à un moyen de commande du système de freinage du véhicule par une deuxième liaison de données,

le moyen de détermination de la vitesse des machines électriques pouvant comprendre un moyen de recalcul des vitesses des machines électriques apte à recalculer la vitesse de chacune des machines électriques à partir des mesures des vitesses de rotation des roues droite et gauche du deuxième train de roues transmises par la deuxième liaison de données, si les vitesses de rotation des machines électriques ne sont pas transmises par la première liaison de données.

Le moyen de détermination des conditions d'activation de la limitation de vitesse peut comprendre un moyen de mémorisation d'un premier seuil de vitesse et un moyen de mémorisation d'un deuxième seuil de vitesse supérieur au premier seuil.

Le système de commande peut comprendre un premier comparateur de la vitesse des machines électriques au premier seuil de vitesse et un moyen de régulation du couple maximal des machines électriques en fonction du signal du premier comparateur, des vitesses des machines électriques.

Le système de commande peut comprendre un deuxième comparateur de la vitesse des machines électriques au deuxième seuil de vitesse et un moyen pour imposer une consigne de couple maximal nul des machines électriques en fonction du signal du deuxième comparateur.

D'autres buts, caractéristiques et avantages apparaîtront à la lecture de la description suivante donnée uniquement en tant qu'exemple non limitatif et faite en référence aux dessins annexés sur lesquels :
- la figure 1 illustre les principaux éléments d'un système de commande des machines électriques d'un véhicule hybride, et
- la figure 2 illustre les principales étapes du procédé de commande des machines électriques d'un véhicule hybride.

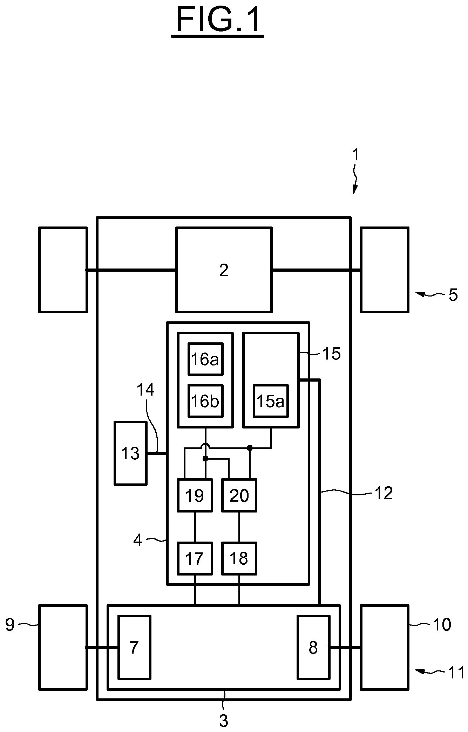

La figure 1 illustre le système de commande 4 des machines électriques 7,8 d'un véhicule hybride 1 muni également d'un moteur à combustion interne 2. Les machines électriques 7,8 sont couplées chacune à une roue 9,10 du train 11 de roues arrières, les machines électriques 7,8 étant indépendantes l'une de l'autre. Le système de commande 4 est particulièrement adapté à la commande des machines électriques 7,8 lorsque le moteur à combustion interne 2 est actif.

Le système de commande 4 est relié au système de traction électrique 3 comprenant les deux machines électriques 7,8 par une liaison CAN (acronyme anglais pour « Controller Area Network ») dite première liaison de données 12 permettant notamment de transmettre la vitesse de rotation de chacune des machines électriques 7,8.

Le système de commande 4 communique également avec un moyen de commande du système de freinage 13 par une autre liaison CAN, dite deuxième liaison de données 14. La vitesse de rotation de chacune des roues arrière droite et arrière gauche est transmise au système de commande 4 par la deuxième liaison de données 14.

Le système de commande 4 comprend un moyen de détermination 15 de la vitesse des machines électriques relié en sortie à un moyen de détermination 16 de conditions d'activation d'une limitation de la vitesse de rotation des machines électriques lui-même relié en sortie à un moyen de régulation 17 du couple des machines électriques et à un moyen 18 pour imposer un couple maximal nul des machines électriques.

Le moyen de détermination 15 de la vitesse des machines électriques est relié en entrée par la première liaison de donnée 12 à des capteurs de vitesse des roues arrières 9,10 et de vitesse des machines électriques 7,8. Le moyen de détermination 15 de la vitesse des machines électriques comprend un moyen de recalcul 15a des vitesses des machines électriques en fonction de la vitesse de rotation des roues arrières.

Le moyen de détermination 16 de conditions d'activation d'une limitation de la vitesse de rotation des machines électriques comprend un moyen de mémorisation 16a d'un premier seuil de vitesse et un moyen de mémorisation 16b d'un deuxième seuil de vitesse.

Un premier comparateur 19 est connecté en entrée au moyen de détermination 15 de la vitesse des machines électriques et au moyen de mémorisation 16a d'un premier seuil de vitesse.

Un deuxième comparateur 20 est connecté en entrée au moyen de détermination 15 de la vitesse des machines électriques et au moyen de mémorisation 16b d'un deuxième seuil de vitesse.

Le moyen de régulation 17 du couple des machines électriques est relié en entrée au premier comparateur 19 et en sortie à chacune des machines électriques 7,8.

Le moyen 18 pour imposer un couple maximal nul des machines électriques est relié en entrée au deuxième comparateur 20, et en sortie à chacune des machines électriques 7,8.

Le procédé de commande comprend des étapes au cours desquelles on détermine la vitesse des machines électriques 7,8 en fonction de la vitesse de rotation de chacune des roues arrières 9,10 et de la vitesse de rotation de chacune des machines électriques 7,8 arrières, on compare les vitesses des machines électriques 7,8 à des seuils, afin de, si besoin, limiter ou annuler le couple des machines électriques 7,8.

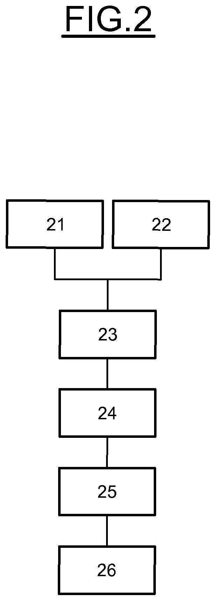

Ces différentes étapes sont décrites plus en détail ci-dessous en références à la figure 2.

Au cours d'une première étape 21, on détermine la vitesse des machines électriques 7,8 en fonction de signaux de vitesses de rotation transmis par les machines électriques 7,8 à travers la première liaison de données 12 sur une période de temps prédéterminée, par exemple 10 millisecondes.

Alternativement, si les vitesses de rotation des machines électriques 7,8 ne sont pas déterminables en fonction des signaux transmis par la première liaison de données 12 pour différentes raisons (capteurs défaillants, dysfonctionnement de la première liaison de données 12, panne de tout le système de traction électrique, etc.), on recalcule, au cours d'une deuxième étape 22, la vitesse des machines électriques 7,8 (droite et gauche) à partir des mesures des vitesses de rotation des roues du deuxième train de roues (droite et gauche) transmises par la deuxième liaison de données 14. Ce calcul peut s'effectuer en multipliant la vitesse de chacune des roues par un coefficient correspondant au rapport de démultiplication des pignons reliant chaque roue à son moteur électrique.

Lors d'un fonctionnement normal, on peut donc connaitre la vitesse des machines électriques 7,8 et réaliser une limitation de la vitesse de rotation des roues dans toutes les conditions de fonctionnement, y compris lorsque un roue patine ou ne touche plus le sol. On peut également assurer la limitation lors d'un dysfonctionnement partiel ou complet du système de traction électrique par le biais d'un recalcul des valeurs alors indisponibles.

Au cours d'une troisième étape 23, on détermine si la vitesse de rotation des machines électriques 7,8 est supérieure à un premier seuil de vitesse mémorisé. Si tel est le cas, au cours d'une quatrième étape 24, on régule le couple de toutes les machines électriques 7,8 en dessous d'un couple maximal permettant de limiter leur vitesse de rotation.

Cela permet de limiter le couple de traction (et donc la vitesse des machines) tout en assurant une continuité de couple (et donc un agrément de conduite de qualité).

Au cours d'une cinquième étape 25, on détermine si la vitesse de rotation des machines électriques 7,8 est supérieure à un deuxième seuil mémorisé. Si tel est le cas, au cours d'une sixième étape 26, on émet une consigne de couple maximal nul à destination des machines électriques 7,8.

Cela permet d'imposer un couple nul aux roues pour être certain de faire baisser la vitesse des machines électriques 7,8.

Le procédé et le système de commande 4 permettent ainsi de limiter la vitesse de rotation des machines électriques 7,8 afin d'éviter leur endommagement sous l'effet de forces de traction imposées par le moteur à combustion interne 2.

## Revendications

1. Procédé de commande d'un véhicule automobile comprenant un moteur à combustion interne (2) couplé à un premier train de roues et au moins deux machines électriques (7,8) couplées chacune à une roue d'un deuxième train de roues,
le procédé comprenant les étapes suivantes :
on détermine la vitesse d'au moins une des machines électriques (7,8), le procédé étant **caractérisé par le fait qu'**il comprend les étapes suivantes :
on compare la vitesse déterminée à un seuil,
si la vitesse déterminée est supérieure au dit seuil, on agit sur le couple maximal des machines électriques (7,8) de façon à limiter la vitesse de rotation desdites machines.

2. Procédé de commande selon la revendication 1, dans lequel, on détermine la vitesse des machines électriques (7,8) à partir de la valeur maximale parmi les vitesses de rotation des machines électriques (7,8) gauche et droite sur une période de temps prédéterminée.

3. Procédé de commande selon la revendication 2, dans lequel, on détermine la vitesse des machines électriques (7,8) à partir des mesures des vitesses de rotation des roues droite et gauche du deuxième train de roues et de la valeur maximale parmi les vitesses de rotation des roues gauche et droite sur une période de temps prédéterminée

4. Procédé de commande selon l'une quelconque des revendications précédentes, dans lequel
on détermine si la vitesse de rotation des machines électriques (7,8) est supérieure à un premier seuil de vitesse,
si tel est le cas, on régule le couple maximal des machines électriques (7,8) pour limiter leur vitesse de rotation, alternativement, si la vitesse de rotation des machines électriques (7,8) est supérieure à un deuxième seuil de vitesse supérieur au premier seuil,
on émet une consigne de couple maximal nul pour les machines électriques (7,8),

5. Procédé de commande selon l'une quelconque des revendications précédentes, dans lequel le premier train de roues est le train avant 5, le deuxième train de roues étant le train arrière.

6. Système de commande d'un véhicule automobile comprenant un moteur à combustion interne (2) couplé à un premier train de roues et au moins deux machines électriques (7,8) couplées chacune à une roue du deuxième train de roues, le système de commande (4) étant relié au moteur à combustion interne (2) et aux machines électriques (7,8),
le système comprenant :
un moyen de détermination (15) de la vitesse des machines électriques, le système étant **caractérisé par le fait qu'**il comprend :
un moyen de détermination (16) de conditions d'activation d'une limitation de la vitesse de rotation des machines électriques, et
un moyen de régulation (17) du couple des machines électriques.

7. Système de commande selon la revendication 6, dans lequel, le système de commande (4) est relié aux machines électriques (7,8) par une première liaison de données (12),
le moyen de détermination (15) de la vitesse des machines électriques étant apte à déterminer une vitesse limite des machines électriques (7,8) égale à la valeur maximale parmi les vitesses de rotation des machines électriques (7,8) gauche et droite transmises par la première liaison de données (12) sur une période de temps prédéterminée.

8. Système de commande selon la revendication 6, dans lequel, le système de commande (4) est relié à un moyen de commande du système de freinage (13) du véhicule par une deuxième liaison de données (14),
le moyen de détermination (15) de la vitesse des machines électriques comprenant un moyen de recalcul (15a) des vitesses des machines électriques apte à recalculer la vitesse de chacune des machines électriques (7,8) à partir des mesures des vitesses de rotation des roues droite et gauche du deuxième train de roues transmises par la deuxième liaison de données (14), si les vitesses de rotation des machines électriques (7,8) ne sont pas transmises par la première liaison de données (12),

9. Système de commande selon l'une quelconque des revendications 6 à 8, dans lequel, le moyen de détermination des conditions d'activation de la limitation de vitesse comprend un moyen de mémorisation (16a) d'un premier seuil de vitesse et un moyen de mémorisation (16b) d'un deuxième seuil de vitesse supérieur au premier seuil.

10. Système de commande selon la revendication 9, comprenant un premier comparateur (19) de la vitesse des machines électriques (7,8) au premier seuil de vitesse et un moyen de régulation du couple maximal des machines électriques (7,8) en fonction du signal du premier comparateur (19), des vitesses des machines électriques (7,8).

11. Système de commande selon l'une quelconque des revendications 9 ou 10, comprenant un deuxième comparateur (20) de la vitesse des machines électriques (7,8) au deuxième seuil de vitesse et un moyen pour imposer une consigne de couple maximal nul des machines électriques (7,8) en fonction du signal du deuxième comparateur (20).

## Patentansprüche

1. Verfahren zum Steuern eines Kraftfahrzeugs, das eine Brennkraftmaschine (2), die mit einem ersten Achssatz gekoppelt ist, und wenigstens zwei elektrische Maschinen (7, 8), die jeweils mit einem Rad eines zweiten Achssatzes gekoppelt sind, umfasst,
wobei das Verfahren die folgenden Schritte umfasst:
Bestimmen der Drehzahl wenigstens einer der elektrischen Maschinen (7, 8),
wobei das Verfahren **dadurch gekennzeichnet ist, dass** es die folgenden Schritte umfasst:
Vergleichen der bestimmten Drehzahl mit einem Schwellenwert,
falls die bestimmte Drehzahl größer als der Schwellenwert ist, Einwirken auf das maximale Drehmoment der elektrischen Maschinen (7, 8) in der Weise, dass die Drehzahl der Maschinen begrenzt wird.

2. Steuerverfahren nach Anspruch 1, wobei
die Drehzahl der elektrischen Maschinen (7, 8) anhand der höchsten der Drehzahlen der linken und der rechten elektrischen Maschine (7, 8) während einer vorgegebenen Zeitdauer bestimmt wird.

3. Steuerverfahren nach Anspruch 2, wobei die Drehzahl der elektrischen Maschinen (7, 8) anhand von Messungen der Drehzahlen des rechten und des linken Rades des zweiten Achssatzes und der höchsten der Drehzahlen des linken und des rechten Rades während einer vorgegebenen Zeitdauer bestimmt wird.

4. Steuerverfahren nach einem der vorhergehenden Ansprüche, wobei
bestimmt wird, ob die Drehzahl der elektrischen Maschinen (7, 8) größer als ein erster Drehzahlschwellenwert ist,
falls dies der Fall ist, das maximale Drehmoment der elektrischen Maschinen (7, 8) reguliert wird, um ihre Drehzahl zu begrenzen,
falls alternativ die Drehzahl der elektrischen Maschinen (7, 8) größer als ein zweiter Drehzahlschwellenwert ist, der größer als der erste Schwellenwert ist,
ein Sollwert von null für das maximale Drehmoment für die elektrischen Maschinen (7, 8) ausgegeben wird.

5. Steuerverfahren nach einem der vorhergehenden Ansprüche, wobei der erste Achssatz der vordere Satz 5 ist und der zweite Achssatz der hintere Satz ist.

6. System zum Steuern eines Kraftfahrzeugs, das eine Brennkraftmaschine (2), die mit einem ersten Achssatz gekoppelt ist, und wenigstens zwei elektrische Maschinen (7, 8), die jeweils mit einem Rad eines zweiten Achssatzes gekoppelt sind, umfasst, wobei das Steuersystem (4) mit der Brennkraftmaschine (2) und mit den elektrischen Maschinen (7, 8) verbunden ist,
wobei das System Folgendes umfasst:
ein Mittel (15) zum Bestimmen der Drehzahl der elektrischen Maschinen,
wobei das System **dadurch gekennzeichnet ist, dass** es Folgendes umfasst:
ein Mittel (16) zum Bestimmen von Bedingungen für die Aktivierung einer Begrenzung der Drehzahl der elektrischen Maschinen und
ein Mittel (17) zum Regulieren des Drehmoments der elektrischen Maschinen.

7. Steuersystem nach Anspruch 6, wobei das Steuersystem (4) mit den elektrischen Maschinen (7, 8) über eine erste Datenverbindung (12) verbunden ist,
wobei das Mittel (15) zum Bestimmen der Drehzahl der elektrischen Maschinen dafür ausgelegt ist, eine Grenzdrehzahl der elektrischen Maschinen (7, 8), die gleich der höchsten der Drehzahlen der linken und der rechten elektrischen Maschine (7, 8) ist, die über die erste Datenverbindung (12) während einer ersten vorgegebenen Zeitdauer übertragen werden, zu bestimmen.

8. Steuersysteme Anspruch 6, wobei das Steuersystem (4) mit einem Mittel (13) zum Steuern des Bremssystems des Fahrzeugs über eine zweite Datenverbindung (14) verbunden ist,
wobei das Mittel (15) zum Bestimmen der Drehzahl der elektrischen Maschinen ein Mittel (15a) zum erneuten Berechnen der Drehzahlen der elektrischen Maschinen umfasst, das dafür ausgelegt ist, die Drehzahl jeder der elektrischen Maschinen (7, 8) anhand von Messungen der Drehzahlen des rechten und des linken Rades des zweiten Achssatzes, die über die zweite Datenverbindung (14) übertragen werden, erneut zu berechnen, falls die Drehzahlen der elektrischen Maschinen (7, 8) über die erste Datenverbindung (12) nicht übertragen werden.

9. Steuersystem nach einem der Ansprüche 6 bis 8, wobei das Mittel zum Bestimmen von Bedingungen für die Aktivierung der Begrenzung der Drehzahl ein Mittel (16a) zum Speichern eines ersten Drehzahlschwellenwerts und ein Mittel (16b) zum Speichern eines zweiten Drehzahlschwellenwerts, der größer als der erste Schwellenwert ist, umfasst.

10. Steuersystem nach Anspruch 9, das einen ersten Komparator (19) zum Vergleichen der Drehzahl der elektrischen Maschinen (7, 8) mit dem ersten Drehzahlschwellenwert und ein Mittel zum Regulieren des maximalen Drehmoments der elektrischen Maschinen (7, 8) als Funktion des Signals des ersten Komparators (7, 8) anhand der Drehzahlen der elektrischen Maschinen (7, 8) umfasst.

11. Steuersystem nach einem der Ansprüche 9 oder 10, das einen zweiten Komparator (20) zum Vergleichen der Drehzahl der elektrischen Maschinen (7, 8) mit dem zweiten Drehzahlschwellenwert und ein Mittel zum Vorgeben eines Sollwerts von null für das maximale Drehmoment der elektrischen Maschinen (7, 8) als Funktion des Signals des zweiten Komparators (20) umfasst.

## Claims

1. Method for controlling a motor vehicle comprising an internal combustion engine (2) coupled to a first axle set and at least two electric machines (7,8) each coupled to one wheel of a second axle set,
the method comprising the following steps:
the speed of at least one of the electric machines (7,8) is determined,
the method being **characterized in that** it comprises the following steps:
the determined speed is compared against a threshold,
if the determined speed is above said threshold, the maximum torque of the electric machines (7,8) is altered so as to limit the rotational speed of said machines.

2. Control method according to Claim 1, in which
the speed of the electric machines (7,8) is determined from the maximum value of the rotational speeds of the left and right electric machines (7,8) over a predetermined period of time.

3. Control method according to Claim 2, in which the speed of the electric machines (7,8) is determined from measurements of the rotational speeds of the left and right wheels of the second axle set and from the maximum value of the rotational speeds of the left and right wheels over a predetermined period of time.

4. Control method according to any one of the preceding claims, in which
it is determined whether the rotational speed of the electric machines (7,8) is above a first speed threshold;
if it is, the maximum torque of the electric machines (7,8) is regulated in order to limit their rotational speed,
alternatively, if the rotational speed of the electric machines (7,8) is above a second speed threshold higher than the first threshold,
a zero maximum torque instruction is issued to the electric machines (7,8).

5. Control method according to any one of the preceding claims, in which the first axle set is the front axle set 5, the second axle set being the rear axle set.

6. System for controlling a motor vehicle comprising an internal combustion engine (2) coupled to a first axle set and at least two electric machines (7,8) each coupled to one wheel of the second axle set, the control system (4) being connected to the internal combustion engine (2) and to the electric machines (7,8),
the system comprising:
a means (15) of determining the speed of the electric machines,
the system being **characterized in that** it comprises:
a means (16) of determining the conditions for activating a limitation of the rotational speed of the electric machines, and
a means (17) of regulating the torque of the electric machines.

7. Control system according to Claim 6, in which the control system (4) is connected to the electric machines (7,8) by a first data link (12),
the means (15) of determining the speed of the electric machines being able to determine a limit speed of the electric machines (7,8) equal to the maximum value of the rotational speeds of the left and right electric machines (7,8) which are transmitted by the first data link (12) over a predetermined period of time.

8. Control system according to Claim 6, in which
the control system (4) is connected to a means of controlling the braking system (13) of the vehicle by a second data link (14),
the means (15) of determining the speed of the electric machines comprising a means (15a) of recalculating the speeds of the electric machines which is able to recalculate the speed of each of the electric machines (7,8) from the measurements of the rotational speeds of the right and left wheels of the second axle set which are transmitted by the second data link (14), if the rotational speeds of the electric machines (7,8) are not transmitted by the first data link (12).

9. Control system according to any one of Claims 6 to 8, in which the means of determining the conditions for activating the limitation of speed comprises a means (16a) for the memory-storage of a first speed threshold and a means (16b) for the memory-storage of a second speed threshold higher than the first threshold.

10. Control system according to Claim 9, comprising a first comparator (19) comparing the speed of the electric machines (7,8) to the first speed threshold and a means of regulating the maximum torque of the electric machines (7,8) on the basis of the signal from the first comparator (19) comparing the speeds of the electric machines (7,8).

11. Control system according to either one of Claims 9 and 10, comprising a second comparator (20) comparing the speed of the electric machines (7,8) to the second speed threshold and a means for imposing a zero maximum torque instruction on the electric machines (7,8) on the basis of the signal from the second comparator (20).
